# EUROPEAN PATENT SPECIFICATION

(11) **EP 1 816 018 B1**
(45) Date of publication and mention of the grant of the patent: **30.12.2015**
(21) Application number: 05782329.6
(22) Date of filing: 09.09.2005
(51) Int. Cl.: B60J 5/00, B60R 13/02, B68G 7/05, A47C 31/02

(54) **INTERIOR TRIM MATERIAL FOR VEHICLE FORMED BY APPLYING DOUBLE STITCH TO MOUNTING MATERIAL AND METHOD OF MANUFACTURING THE SAME**
DURCH DOPPELVERNADELTES MONTAGEMATERIAL GEBILDETES INNENAUSSTATTUNGSMATERIAL FÜR FAHRZEUGE UND HERSTELLUNGSVERFAHREN DAFÜR
MATERIAU D'HABILLAGE INTERIEUR POUR VEHICULE FORME EN APPLICANT UN DOUBLE POINT A UN MATERIAU DE FIXATION ET SON PROCEDE DE FABRICATION

(30) Priority: 09.09.2004 JP 2004261723
(43) Date of publication of application: 08.08.2007
(73) Proprietor: TS Tech Co., Ltd., Asaka-shi, Saitama 351-0012 (JP)
(72) Inventor: TAKEZAWA, Ryoichiro, TS TECH CO., LTD., Shioya-gun, Tochigi 3291217 (JP); IWASAKI, Takashi, TS TECH CO., LTD., Shioya-gun, Tochigi 3291217 (JP)
(74) Representative: Grünecker Patent- und Rechtsanwälte PartG mbB
(86) International application number: PCT/JP2005/016608
(87) International publication number: WO 2006/028206

(56) References cited:
- JP-A- 2 148 823
- JP-A- 4 272 981
- JP-A- 7 149 148
- JP-A- 60 018 040
- JP-A- 2005 053 435
- JP-U- 6 065 030
- JP-U- 02 148 823
- JP-U- 60 018 040
- JP-Y2- 2 541 469

## Description

### Technical Field

The present invention relates to an interior trim material for a vehicle according to the preamble of claim 1, formed by applying double stitch on a cloth material, and a method of manufacturing the same, according to claim 5. A known interior trim material is disclosed in JP 402148823 U.

### Background Art

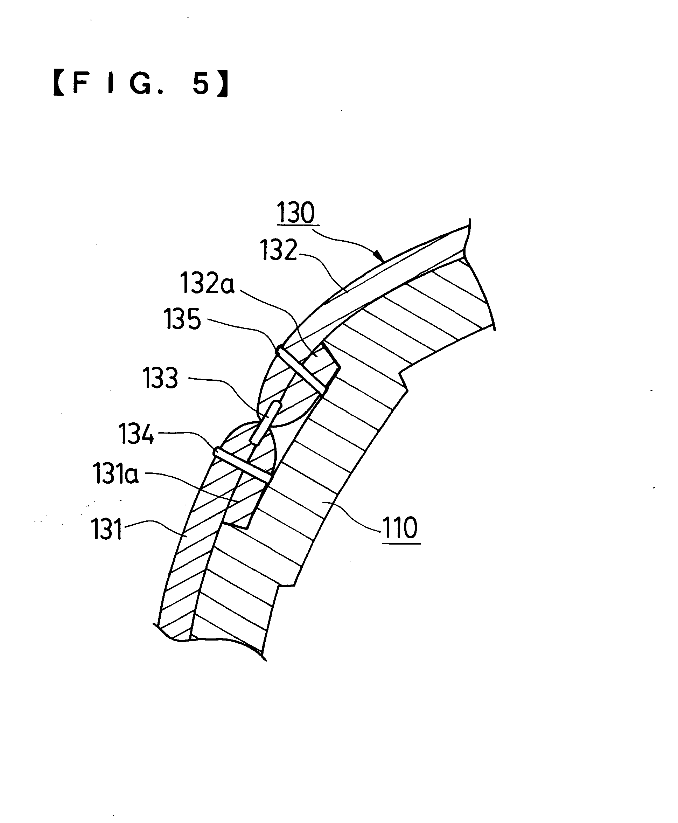

Conventionally, as shown in figure 5, an interior trim material for a vehicle is constituted by covering a base member 110 with a cloth material 130, and the cloth material 130 is over lapped seamed on its face near respective ends of the each cloth material 130 so as to create luxuriousness. At this time, as shown in Fig. 5, respective ends 131a and 132a of cover materials 131 and 132 constituting the cloth material 130 are folded inward and sewn at a sewn portion 133 and the cloth material 130 is sewn into a three-dimensional shape using double stitches 134 and 135.

In the above-described conventional art, since a step is provided only at a folded portion of a double stitch portion of the base member and the step is utilized as positioning for bonding, the cover material runs on due to presence of only the step, and a seam swinging of the stitch is caused, so that a disadvantage occurs in production of a stable product.

There is a disadvantage that merchantability in appearance of the double stitch is degraded when a seam swinging occurs, which results in occurrence of inferior appearance in quality.

Alternatively, in order to prevent corrugation of a seam line on a over lapped seamed part and perform positioning and joining of the cloth material, a technique has been known that protruding portion are provided on a foam layer such as hard urethane foam serving as a base member to be joined, and the protruding portion are bitten into a groove generated at the over lapped seamed part of the cover material and the cloth material is fixed in a bonding manner with adhesive agent.

However, since it is difficult to form the protruding portion into an acute shape or retain the shape when molding the same integrally with the foam layer, the corrugation occurring at the over lapped seamed part cannot be prevented accurately, and further since the protruding portion are fixed in a bonding manner with adhesive agent, it is feared that the adhesive agent may flow out of gaps in the over lapped seamed part.

In order to solve the above-described disadvantage, there has been developed a technique for improving a joining and fixing structure of a sewn portion of the cloth material such that corrugation can be prevented from occurring at the over lapped seamed part reliably when joining of the cloth material is performed, and adhesive agent is prevented from oozing using a simple structure. In this technique, a band-like resin plate provided with protruding portion on both its faces is used, the protruding portion on one face side of the band-like plate is put on a back face side of the cloth material along the sewing portion of the cloth material, the band-like plate and the cloth material are sewn together, and the protruding portion on the other face side of the band-like plate are bitten into the foam layer of the base member to be attached to perform positioning and joining of the cloth material and the base member to be joined (for example, see Patent Literature 1).

Patent Literature 1: Japanese Utility Model Registration No. 2541469 (pages 1 to 2, Fig. 1)

In the joining and fixing structure of the sewn portion of the cloth material, since the band-like resin plate is used, the protruding portion on one face side thereof is put on the back face side while being caused to correspond to the sewing portion of the cloth material, the sewn portion can be shaped accurately by the protruding portion to prevent corrugation from occurring reliably, and since the band-like plate is attached on the back face side of the cloth material by putting the protruding portion side and the cloth material on each other through sewing without using adhesive agent, oozing of adhesive agent from the sewn-up portion never occurs. Since the protruding portion on the other face side of the band-like plate is bitten into the foam layer to join the band-like plate on the foam layer on the side of the base member to be attached, the cloth material can be positioned to be joined and fixed easily. According to the joining and fixing structure of the sewn portion of the cloth material, such a beneficial effect can be achieved that accurate shaping of the sewing line can be conducted and reliable positioning and bonding of the cloth material to the base member to be covered with the cloth material can be conducted by only using the band-like resin plate formed integrally with the protruding portion on both its faces.

The technique of the above-described Patent Literature 1 achieves such beneficial operation and effect as described above, but there is a problem that a shape of the band-like plate cannot be kept precisely if a sink occurs when the band-like plate is molded, and a seam swinging is generated at a double stitch portion when the shape of the band-like plate is warped, so that appearance improvement cannot be achieved.

Since the band-like plate made from resin is used, when a portion where the cloth material is bonded is a curved surface, there is a disadvantage that it is difficult to cause the band-like plate to follow the curved surface.

The present invention has been made in view of the above-described circumstances, and an object thereof is to provide an interior trim material for a vehicle in which a seam swinging of double stitch is eliminated, positioning during manufacturing is easy, and merchantability in appearance of the double stitch is improved, and a method of manufacturing the same.

### Disclosure of the Invention

According to an interior trim material formed by applying double stitch on a cloth material of the present invention, the above-described problem is solved by an interior trim material for a vehicle provided with a base member, a band-like plate, and a cloth material, which is formed by applying double-stitch on at least the band-like plate and the cloth material, wherein the band-like plate is provided with a projecting portion formed in a longitudinal direction on the side of the base member and a cored bar inserted into the projecting portion, the base member is provided with a first groove portion capable of accommodating the whole band-like plate and a second groove portion engaging the projecting portion of the band-like plate, the cloth material and the band-like plate are simultaneously sewn together in a disposition region of the band-like plate, the cloth material is double-stitched, and the band-like plate sewn together with the cloth material is positioned on the respective groove portions of the base member to be joined to the base member.

In this manner, since the first groove portion capable of accommodating the whole band-like plate and the second groove portion engaging the projecting portion of the band-like plate are formed on the base member, the cloth material and the band-like plate are simultaneously sewn together in the disposition region of the band-like plate and the cloth material is double-stitched, and the band-like plate is positioned at the respective groove portions of the base member to be joined to the base member, a folded portion of the double stitch is supported by the band-like plate, and simultaneously the whole of the band-like plate is positioned at the first groove portion of the base member, and the folded portion of the double stitch is fitted into a predetermined position. Since the second groove portion of the base member is positioned at the projecting portion of the band-like plate, and the band-like plate is directly supported by the base member, a position of the band-like plate is reliably positioned at a predetermined position with respect to the base member, so that product unevenness can be prevented.

Since the cored bar is inserted into the projecting portion of the band-like plate, a sink occurring at a time of formation of the band-like plate due to presence of the projecting portion is prevented after the formation, so that it becomes possible to prevent shrinkage from occurring on the band-like plate.

Such a constitution can be adopted that a continuous cut out portion is formed on at least one side of both the sides in a longitudinal direction of the band-like plate. In this manner, in a case in which the interior trim material for a vehicle has a curved surface, the interior trim material for a vehicle can follow the curved surface to conform to the curved surface due to the continuous cut out portion.

Further, such a constitution can also be adopted that the projecting portions of the band-like plate are intermittently formed, and the second groove portion of the base member are intermittently formed so as to match with the projecting portions of the band-like plate. In this manner, by forming the projecting portions and the second groove portions intermittently and engaging them with each other, positioning is performed reliably. Incidentally, it is preferable that the interior trim material for a vehicle be an armrest.

According to a method of manufacturing an interior trim material for a vehicle formed by applying double stitch on a cloth material, the above-described problem is solved by a method of manufacturing an interior trim material for a vehicle provided with a base member, a band-like plate, and a cloth material, which is formed by applying double stitch on at least the band-like plate and the cloth material, the method of manufacturing an interior trim material for a vehicle including a step of sewing simultaneously the cloth material and the band-like plate where a projecting portion inserted with a cored bar is formed to extend in a longitudinal direction on the base member side in a disposition region of the band-like plate to apply double stitch, a step of applying adhesive agent on at least either one of the band-like plate or the base member provided with a first groove portion capable of accommodating the whole band-like plate and a second groove portion engaging the projecting portion, and a step of positioning the band-like plate sewn together with the cloth material at the respective groove portions of the base member to be joined to the base member. Thereby, the interior trim material for a vehicle formed by applying double stitch on the cloth material can be manufactured easily.

Incidentally, the cloth material is formed by overlapping two cover materials and sewing them while leaving end portion sides of the two cover materials as folded portions.

In the step of positioning the band-like plate sewn together with the cloth material on the respective groove portions of the base member to be joined to the base member, it is preferable that a portion including cut out portions formed on at least one side of both the sides in a longitudinal direction of the band-like plate, be flexed and caused to contact with the base member, thereby joining the band-like plate to the base member.

### Brief Description of the Drawings

Fig. 1 is an explanatory view of joining a band-like plate and a cloth material, and a base member according to an embodiment;
Fig. 2 is a partially sectional explanatory view of an interior trim material for a vehicle, taken along line X-X in Fig. 4;
Fig. 3 is a partially enlarged view of B portion in Fig. 2;
Fig. 4 is an explanatory view showing one example of an interior trim material for a vehicle; and
Fig. 5 is a partially enlarged view similar to Fig. 3 showing a conventional example.

### Best Mode for carrying out the Invention

Hereinafter, an embodiment of the present invention will be explained with reference to the drawings. Incidentally, it is obvious that members, dispositions, and the like which are explained below do not limit the present invention, and they can be modified variously along the spirit of the present invention.

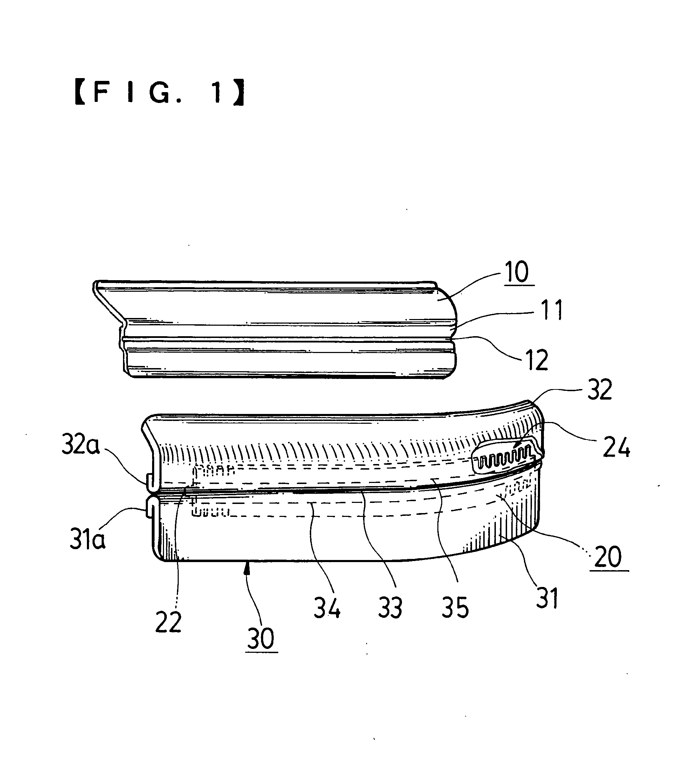

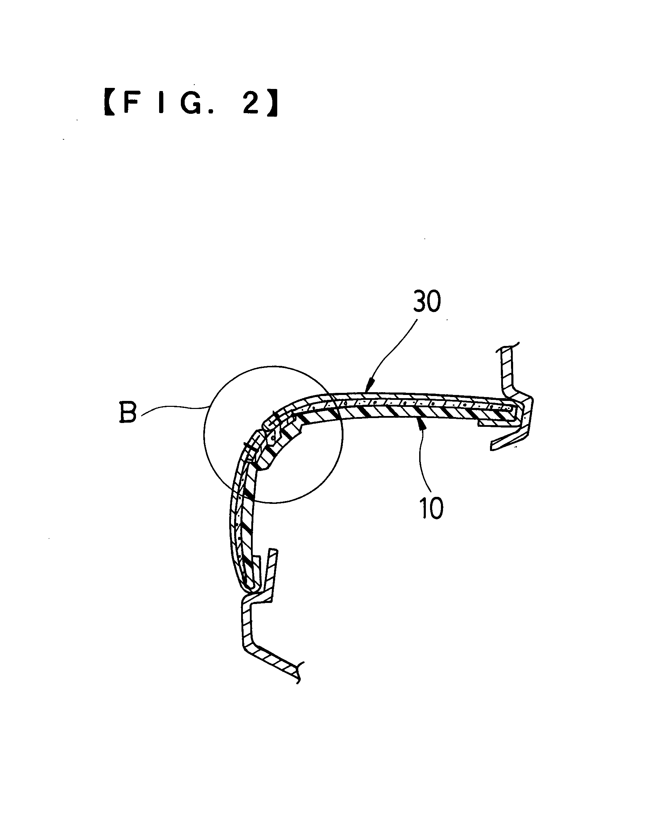

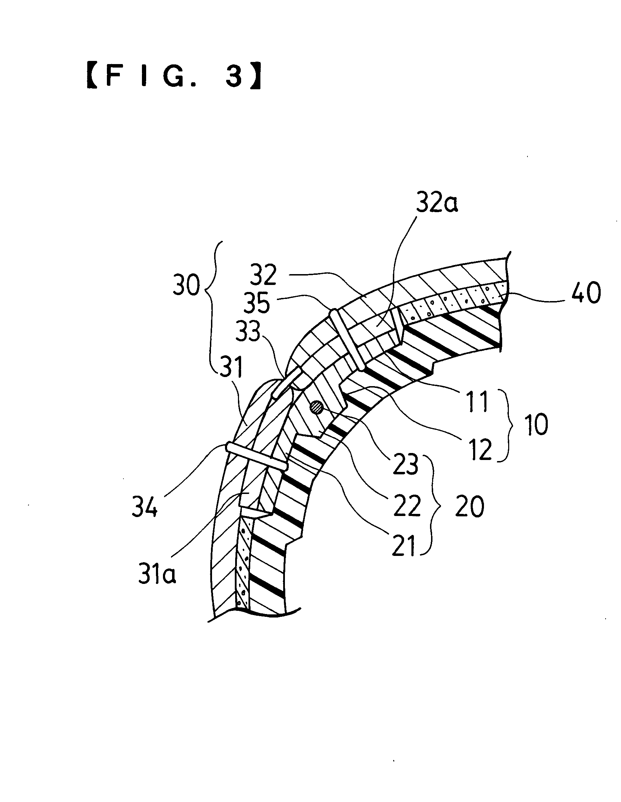

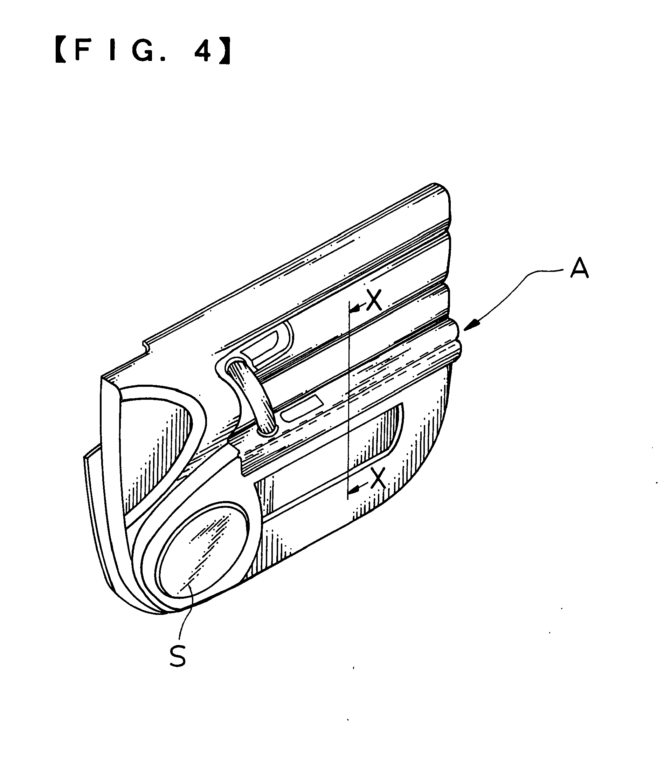

Fig. 1 to Fig. 4 show an embodiment of the present invention, Fig. 1 is an explanatory view of joining a band-like plate and a cloth material, and a base member, Fig. 2 is a partially sectional explanatory view of an interior trim material for a vehicle, taken along line X-X in Fig. 4, Fig. 3 is a partially enlarged view of B portion in Fig. 2, and Fig. 4 is an explanatory view showing one example of an interior trim material for a vehicle.

In the embodiment, an armrest A formed inside a door lining will be explained as an example of the interior trim material for a vehicle. As shown in Fig. 4, the armrest A projecting toward the inside of a vehicle is formed on the door lining for a vehicle of the example, and the armrest A is composed of an armrest base member 10 serving as a base member, a band-like plate 20, a cloth material 30, and a foam layer 40 disposed between the armrest base member 10 and the cloth material 30, as shown in Fig. 1 and Fig. 3. The cloth material 30 is formed so as to cover a corner side of a box portion in which a speaker S or the like is provided, which extends from the armrest A.

The armrest base member 10 of the example is constituted of a plate member obtained by forming resin such as acrylonitrile butadiene styrene (ABS) or polypropylene (PP) by injection molding. As shown in Fig. 1, a first groove portion 11 capable of accommodating the whole of the band-like plate 20 and a second groove portion 12 engaging a projecting portion 22 of the band-like plate 20 which is described later are formed in a longitudinal direction on a corner portion of the armrest base member 10' of the example which projects toward the inside of the vehicle. The armrest base member 10 of the example is formed as a member separated from the door lining and fixed on the door lining, but the armrest 10 may be constituted integrally with the door lining.

The band-like plate 20 of the example is formed as a long plate member obtained by forming resin such as olefin-based thermoplastic elastomer (TPO) or polypropylene (PP) by extrusion molding.

The band-like plate 20 of the example has notches on at least one side in a longitudinal direction to form an undulation portion 24 so as to conform to a curved surface. Due to that the undulation portion 24 is provided, when a disposition place of the band-like plate 20 is a curved surface, the band-like plate 20 becomes easy to follow the curved surface as compared with a constitution in which the undulation portion 24 is not provided, so that it becomes possible to cause the band-like plate 20 to conform to the curved surface.

The undulation portion 24 may be formed after molded in a case of extrusion molding, but the undulation portion 24 is molded in a mold so as to be directly molded in a case of injection molding. In a center on one face side in a plate-thickness direction of the band-like plate 20, the projecting portion 22 is formed in a longitudinal direction.

The projecting portion 22 is formed into an approximately-trapezoidal shape in cross section, and the second groove portion 12 of the base member 10 is formed so as to be engageable with the approximately-trapezoidal projecting portion 22. Since the trapezoidal projecting portion 22 is provided, the projecting portion 22 and the second groove portion 12 can be fitted to each other stably, and it becomes possible to dispose the band-like plate 20 on the base member 10 reliably. Incidentally, the cross-sectional shape of the projecting portion 22 is not limited to a trapezoid, and it may be another shape such as a semicycle or a polygonal shape.

A cored bar 23 made of a copper wire or the like is inserted into the projecting portion 22 of the band-like plate 20. Since the cored bar 23 is inserted into the projecting portion 22 in this manner, shrinkage (a sink or the like) occurring after molding can be prevented.

The band-like plate 20 of the example is formed by performing extrusion molding of resin such as TPO or PP or the like, but it may be formed by injection molding.

Incidentally, it is obvious that protruding portion similar to those of the conventional art may be formed on a face opposite to the projecting portion 22.

The cloth material 30 of the example is applied with double stitch (stitch portions 34 and 35) by which a sewn portion 33 or the cloth material 30 and the band-like plate 20 are simultaneously sewn together in a disposition region of the band-like plate 20, and the cloth material 30 is integrated with the band-like plate 20.

The band-like plate 20 sewn together with the cloth material 30 is positioned on the respective groove portions 11 and 12 of the base member 10 to be joined to the base member 10 using adhesive agent or the like, and bonded via a foam layer 40 (see Fig. 3) . As the cloth material 30 and the foam layer 40, the same materials as used in the conventional art can be used. As the cloth material 30, for example, synthetic leather, leather, or fabric cloth can be used, and as the foam layer 40, for example, polyurethane foam material or the like can be used.

Next, a method of manufacturing the armrest A as the interior trim material for a vehicle described above will be explained.

First, the cloth material 30 of the example saw a boundary between folded portions 31a and 32a and portions other than the folded portions 31a and 32a by a sewing machine or the like, while leaving a portion corresponding to the folded portions 31a and 32a on distal end sides of two cover materials 31 and 32 to be sewn together. A portion which has been sewn becomes the sewn portion 33 (that is, the surface portion 30 is sewn while leaving portions which become the folded portions from end portions).

Next, the respective folded portions 31a and 32a are folded, surfaces of the cover materials 31 and 32 and the folded portions 31a and 32a are sewn on each other together with the band-like plate 20 at the stitch portions 34 and 35, and the cloth material 30 and the band-like plate 20 are simultaneously sewn. Thereby, the cloth material 30 and the band-like plate 20 are simultaneously sewn together in the disposition region of the band-like plate 20 and double stitch is applied.

In the example, the sewn portion 33 is positioned on the face just opposite to the projecting portion 22 of the band-like plate 20.

Next, the foam layer 40 is disposed in a region excluding a position where the band-like plate 20 is disposed, and adhesive agent or the like is applied to the base member 10, the foam layer 40, and the like. Then, the band-like plate 20 is positioned in the first groove portion 11, and the projecting portion 22 of the band-like plate 20 is bonded with adhesive agent or the like while being inserted into the second groove portion 12 of the base member 10 to be integrated with the base member 10. At this time, the band-like plate 20 is completely accommodated in the first groove portion 11. When the base member 10 has a curved surface shape and the undulation portion 24 is provided on the band-like plate 20, the band-like plate 20 is firmly attached on the base member 10 while flexing a portion of the band-like plate 20 provided with the undulation portion 24.

Incidentally, the corner portion of the armrest can be formed on the base member in a manner of attaching afterward, but even in such a case, the corner portion thereof is covered with the cloth material similarly.

### Industrial Applicability

According to the present invention, since the band-like plate is sewn simultaneously when double stitch is sewn, and the band-like plate and the projecting portion of the band-like plate and the respective groove portions of the base member are fitted to each other and bonded with adhesive agent or the like, a seam swinging is prevented from being generated, positioning in manufacturing becomes possible reliably, and stable production becomes possible. Incidentally, since the cored bar is inserted into the projecting portion of the band-like plate, shrinkage occurring after molding can be prevented, and further improvement in quality can be achieved.

Since the notches are made on at least one side in the longitudinal direction of the band-like plate, even when the disposition place of the band-like plate is a curved surface, the band-like plate can be disposed while being caused to conform to the curved surface.

## Claims

1. An interior trim material for a vehicle comprising a base member (10), a band-like plate (20), and a cloth material (30) , which is formed by applying double stitch on at least the band-like plate and the cloth material, wherein the band-like plate includes a projecting portion (22) formed in a longitudinal direction on the side of the base member , the base member includes a first groove portion (11) capable of accommodating the whole band-like plate and a second groove portion (12) engaging the projecting portion of the band-like plate, the cloth material and the band-like plate are simultaneously sewn together in a disposition region of the band-like plate and the cloth material is applied double-stitched, and the band-like plate sewn with the cloth material is positioned on the respective groove portions of the base member to be joined to the base member, the interior trim material being **characterised in that** it further comprises a cored bar (23) inserted into the projecting portion (22).

2. The interior trim material for a vehicle formed by applying double stitch on a cloth material according to claim 1, wherein a continuous cut out portion is formed on at least one side of both the sides of the band-like plate in a longitudinal direction.

3. The interior trim material for a vehicle formed by applying double stitch on a cloth material according to claim 1, wherein the projecting portion of the band-like plate is intermittently formed, and the second groove portion of the base member is intermittently formed in a manner of matching with the projecting portion of the band-like plate.

4. The interior trim material for a vehicle formed by applying double stitch on a cloth material according to claim 1, wherein the interior trim material for a vehicle is an armrest.

5. A method of manufacturing an interior trim material for a vehicle comprising a base member (10), a band-like plate (20), and a cloth material (30), which is formed by applying double-stitch on at least the band-like plate and the cloth material, the method of manufacturing an interior trim material for a vehicle comprising:
a step of sewing simultaneously the cloth material and the band-like plate on which a projecting portion (22) inserted with a cored bar (23) is formed to extend in a longitudinal direction on the base member side of the band-like plate in a disposition region of the band-like plate to apply double stitch,
a step of applying adhesive agent on at least either one of the band-like plate or the base member including a first groove portion (11) capable of accommodating the whole band-like plate and a second groove portion (12) engaging the projecting portion, and
a step of positioning the band-like plate sewn together with the cloth material at respective groove portions of the base member to be joined to the base member.

6. The method of manufacturing an interior trim material for a vehicle formed by applying double stitch on a cloth material according to claim 5, wherein the cloth material is formed by overlapping and sewing two cover materials while leaving end portion sides of the two cover materials as folded portions.

7. The method of manufacturing an interior trim material for a vehicle formed by applying double stitch on a cloth material according to claim 5, wherein, in the step of positioning the band-like plate sewn together with the cloth material on the respective groove portions of the base member to be joined to the base member, a portion of the band-like plate including cut out portions formed on at least one side of both sides of the band-like plate in a longitudinal direction thereof is flexed and caused to contact with the base member, thereby joining the band-like plate to the base member.

## Patentansprüche

1. Innenverkleidungsmaterial für ein Fahrzeug, das ein Trägerelement (10), eine streifenartige Platte (20) sowie ein Textilmaterial (30) umfasst, das ausgebildet wird, indem wenigstens die streifenartige Platte und das Textilmaterial doppelt vernäht werden, wobei die streifenartige Platte einen vorstehenden Abschnitt (22) enthält, der in einer Längsrichtung an der Seite des Trägerelementes ausgebildet ist,
das Trägerelement einen ersten Nutabschnitt (11), der die gesamte streifenartige Platte aufnehmen kann, sowie einen zweiten Nutabschnitt (12) enthält, der mit dem vorstehenden Abschnitt der streifenförmigen Platte in Eingriff kommt,
das Textilmaterial und die streifenartige Platte in einem Anordnungsbereich der streifenartigen Platte gleichzeitig vernäht werden und das Textilmaterial doppelt vernäht wird, und
die mit dem Textilmaterial vernähte streifenartige Platte an den jeweiligen Nutabschnitten des Trägerelementes zum Verbinden mit dem Trägerelement positioniert wird und das Innenverkleidungsmaterial **dadurch gekennzeichnet ist, dass** es des Weiteren einen Kernstab (cored bar) (23) umfasst, der in den vorstehenden Abschnitt (22) eingeführt ist.

2. Innenverkleidungsmaterial für ein Fahrzeug, das ausgebildet wird, indem ein Textilmaterial doppelt vernäht wird, nach Anspruch 1, wobei ein durchgehender ausgeschnittener Abschnitt an wenigstens einer Seite der beiden Seiten der streifenartigen Platte in einer Längsrichtung ausgebildet ist.

3. Innenverkleidungsmaterial für ein Fahrzeug, das ausgebildet wird, indem ein Textilmaterial doppelt vernäht wird, nach Anspruch 1, wobei der vorstehende Abschnitt der streifenartigen Platte intermittierend ausgebildet ist und der zweite Nutabschnitt des Trägerelementes dem vorstehenden Abschnitt der streifenartigen Platte entsprechend intermittierend ausgebildet ist.

4. Innenverkleidungsmaterial für ein Fahrzeug, das ausgebildet wird, indem ein Textilmaterial doppelt vernäht wird, nach Anspruch 1, wobei das Innenverkleidungsmaterial für ein Fahrzeug eine Armlehne ist.

5. Verfahren zum Herstellen eines Innenverkleidungsmaterials für ein Fahrzeug, das ein Trägerelement (10), eine streifenartige Platte (20) sowie ein Textilmaterial (30) umfasst, das ausgebildet wird, indem wenigstens die streifenartige Platte und das Textilmaterial doppelt vernäht werden, wobei das Verfahren zum Herstellen eines Innenverkleidungsmaterials für ein Fahrzeug umfasst:
einen Schritt, in dem das Textilmaterial und die streifenartige Platte gleichzeitig vernäht werden, an der ein vorstehender Abschnitt (22), in den ein Kernstab (cored bar) (23) eingeführt ist, so ausgebildet ist, dass er sich in einer Längsrichtung an der Seite des Trägerelementes der streifenartigen Platte in einem Anordnungsbereich der streifenartigen Platte zum Durchführen von Doppelvernähung erstreckt,
einen Schritt, in dem Klebstoff entweder auf die streifenartige Platte oder das Trägerelement aufgetragen wird, das einen ersten Nutabschnitt (11), der die gesamte streifenartige Platte aufnehmen kann, sowie einen zweiten Nutabschnitt (12) enthält, der mit dem vorstehenden Abschnitt in Eingriff ist, und
einen Schritt, in dem die mit dem Textilmaterial vernähte streifenartige Platte an jeweiligen Nutabschnitten des Trägerelementes zum Verbinden mit dem Trägerelement positioniert wird.

6. Verfahren zum Herstellen eines Innenverkleidungsmaterials für ein Fahrzeug, das ausgebildet wird, indem ein Textilmaterial doppelt vernäht wird, nach Anspruch 5, wobei das Textilmaterial ausgebildet wird, indem zwei Bezugmaterialien überlappt und vernäht werden und Seiten von Endabschnitten der zwei Bezugmaterialien als gefaltete Abschnitte belassen werden.

7. Verfahren zum Herstellen eines Innenverkleidungsmaterials für ein Fahrzeug, das ausgebildet wird, indem ein Textilmaterial doppelt vernäht wird, nach Anspruch 5, wobei bei dem Schritt des Positionierens der mit dem Textilmaterial vernähten streifenartigen Platte an den jeweiligen Nutabschnitten des Trägerelementes zum Verbinden mit dem Trägerelement ein Abschnitt der streifenartigen Platte, der ausgeschnittene Abschnitte enthält, die an wenigstens einer Seite von beiden Seiten der streifenartigen Platte in einer Längsrichtung derselben ausgebildet sind, gebogen und in Kontakt mit dem Trägerelement gebracht wird, um so die streifenartige Platte mit dem Trägerelement zu verbinden.

## Revendications

1. Matériau de garniture intérieure pour un véhicule comprenant un élément de base (10), une plaque de type bande (20), et un matériau textile (30), qui est formé par l'application d'une double couture sur au moins la plaque de type bande et le matériau textile, où la plaque de type bande comprend une partie en saillie (22) formée dans un sens longitudinal sur le côté de l'élément de base,
l'élément de base comprend une première partie de rainure (11) capable d'accueillir la plaque entière de type bande et une seconde partie de rainure (12) en prise avec la partie en saillie de la plaque de type bande,
le matériau textile et la plaque de type bande sont simultanément cousus ensemble dans une région d'agencement de la plaque de type bande et le matériau textile est appliqué en double couture, et
la plaque de type bande cousue avec le matériau textile est positionnée sur les parties de rainure respectives de l'élément de base pour être jointe à l'élément de base, le matériau de garniture intérieure étant **caractérisé en ce qu'**il comprend en outre une barre évidée (23) insérée dans la partie en saillie (22).

2. Matériau de garniture intérieure pour un véhicule formé par l'application en double couture sur un matériau textile selon la revendication 1, une partie découpée continue étant formée sur au moins un côté des deux faces de la plaque de type bande dans un sens longitudinal.

3. Matériau de garniture intérieure pour un véhicule formé par l'application en double couture sur un matériau textile selon la revendication 1, où la partie en saillie de la plaque de type bande étant formée de manière intermittente, et la seconde partie de rainure de l'élément de base est formée de manière intermittente d'une manière permettant de correspondre à la partie en saillie de la plaque de type bande.

4. Matériau de garniture intérieure pour un véhicule formé par l'application en double couture sur un matériau textile selon la revendication 1, où le matériau de garniture intérieure pour un véhicule est un accoudoir.

5. Procédé de fabrication d'un matériau de garniture intérieure pour un véhicule comprenant un élément de base (10), une plaque de type bande (20), et un matériau textile (30), qui est formé par l'application en double couture sur au moins la plaque de type bande et le matériau textile, le procédé de fabrication d'un matériau de garniture intérieure pour un véhicule comprenant :
une étape consistant à coudre simultanément le matériau textile et la plaque de type bande sur laquelle une partie en saillie (22) insérée avec une barre évidée (23) est formée pour s'étendre dans un sens longitudinal sur le côté élément de base de la plaque de type bande dans une région d'agencement de la plaque de type bande pour l'application en double couture,
une étape d'application d'un agent adhésif sur au moins l'un ou l'autre de la plaque de type bande ou de l'élément de base comprenant une première partie de rainure (11) capable d'accueillir la plaque entière de type bande et une seconde partie de rainure (12) en prise avec la partie en saillie, et
une étape de positionnement de la plaque de type bande cousue conjointement au matériau textile à des parties de rainure respectives de l'élément de base pour être jointes à l'élément de base.

6. Procédé de fabrication d'un matériau de garniture intérieure pour un véhicule formé par l'application en double couture sur un matériau textile selon la revendication 5, le matériau textile étant formé par chevauchement et couture de deux matériaux de recouvrement tout en laissant les faces des parties d'extrémité des deux matériaux de recouvrement sous la forme de parties pliées.

7. Procédé de fabrication d'un matériau de garniture intérieure pour un véhicule formé par l'application en double couture sur un matériau textile selon la revendication 5, où, dans l'étape de positionnement de la plaque de type bande cousue conjointement au matériau textile sur les parties de rainure respectives de l'élément de base à joindre à l'élément de base, une partie de la plaque de type bande comprenant des parties découpées formées sur au moins une partie des deux faces de la plaque de type bande dans un sens longitudinal de celle-ci est pliée et conduite à entrer en contact avec l'élément de base, joignant de là la plaque de type bande à l'élément de base.
